# DEMANDE DE BREVET EUROPEEN

(11) **EP 4 478 556 A1**
(43) Date de publication de la demande: **18.12.2024**
(21) Numéro de dépôt: 24181391.4
(22) Date de dépôt: 11.06.2024
(51) Int. Cl.: H01R 13/625, H01R 13/635, H01R 24/00

(54) **ENSEMBLE POUR VERROUILLER DEUX PARTIES PAR UN SYSTÈME À BAILLONETTE, ET PROCÉDÉ CORRESPONDANT**

(30) Priorité: 12.06.2023 FR 2305909
(71) Demandeur: D&I Investment, 78150 Le Chesnay Rocquencourt (FR)
(72) Inventeur: ILIE, RAZVAN STEPHANE, 78150 ROQUENCOURT (FR)
(74) Mandataire: Lavoix

(57) **Abrégé**

Ensemble comprenant une première partie (12) et une deuxième partie (14) mobiles selon un axe de connexion (D) entre une configuration verrouillée et une configuration déverrouillée. La première partie comprend l'un d'un rail (42) et d'une rainure, et la deuxième partie comprend l'autre. Une bague (16) montée rotative sur la première partie et forme une rampe de verrouillage et un logement. La deuxième partie définit une surface radialement intérieure délimitant un logement (66) adapté pour recevoir au moins une partie de la bague, et comporte au moins un pion (46) faisant saillie dans le logement. La première partie comprend un système de rappel de la bague. La rampe de verrouillage et le logement sont configurés pour qu'un déplacement manuel (D1) de la première partie et de la deuxième partie axialement l'une vers l'autre provoque un glissement du pion sur la rampe de verrouillage, et un déplacement automatique de la bague angulairement dans un premier sens puis dans un deuxième sens contraire, le pion étant reçu et bloqué axialement dans le logement.

## Description

La présente invention concerne un ensemble comprenant une première partie et une deuxième partie mobiles l'une par rapport à l'autre entre une configuration verrouillée, dans laquelle la première partie et la deuxième partie sont en partie emboitées l'une dans l'autre et verrouillées l'une sur l'autre, et une configuration déverrouillée, dans laquelle la première partie et la deuxième partie sont à l'écart l'une de l'autre.

L'invention concerne également un procédé de verrouillage-déverrouillage correspondant.

Un tel ensemble sert par exemple à connecter et déconnecter deux câbles électriques.

Les ensembles existants à baïonnette ont une bonne robustesse, mais une ergonomie discutable. En effet, le fait de devoir effectuer un mouvement de rotation pour assurer le verrouillage des deux parties est parfois considéré comme fastidieux par un utilisateur.

Un but de l'invention est donc de fournir un ensemble tel que décrit ci-dessus qui permette un verrouillage aussi robuste que les ensembles à baïonnette, tout en présentant une meilleure ergonomie.

A cet effet, l'invention a pour objet un ensemble selon la revendication 1.

Selon des modes de réalisation particuliers, l'ensemble comprend l'une ou plusieurs des caractéristiques correspondant aux revendications 2 à 9, prise(s) seule ou selon toutes les combinaisons techniquement possibles.

L'invention a également pour objet un procédé selon la revendication 10.

L'invention sera mieux comprise à la lecture de la description qui va suivre, donnée uniquement à titre d'exemple et faite en se référant aux dessins annexés sur lesquels :
- la figure 1 est une vue en perspective d'un ensemble selon l'invention dans la configuration déverrouillée,
- la figure 2 est une vue en perspective, sous un autre angle, de la première partie et de la bague de l'ensemble représenté sur la figure 1,
- la figure 3 est une vue de la première partie représentée sur les figures 1 et 2, un corps de la bague étant omis, et
- la figure 4 est une vue en coupe de l'ensemble représenté sur la figure 1 selon un plan radial passant par l'axe de connexion de l'ensemble.

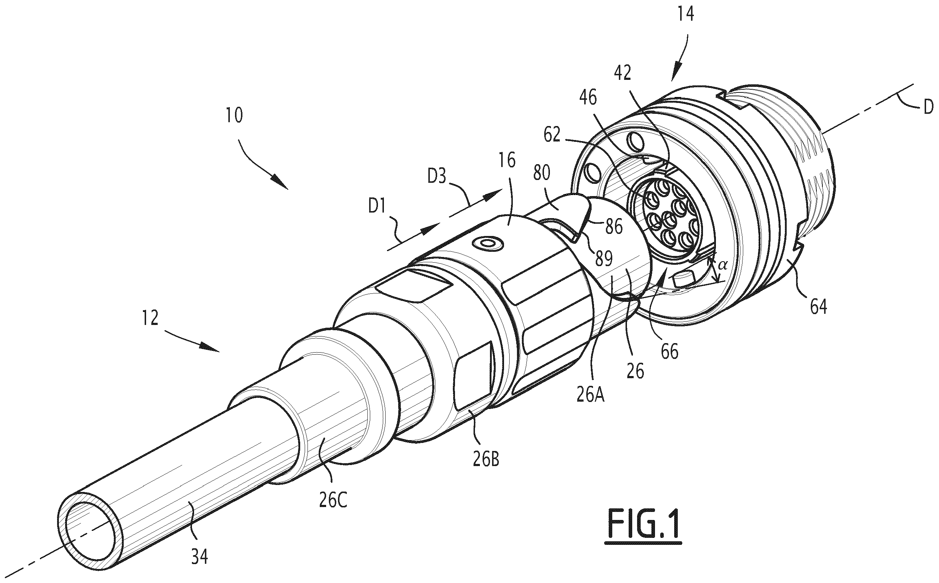

En référence aux figures 1 à 4, on décrit un ensemble 10 selon l'invention.

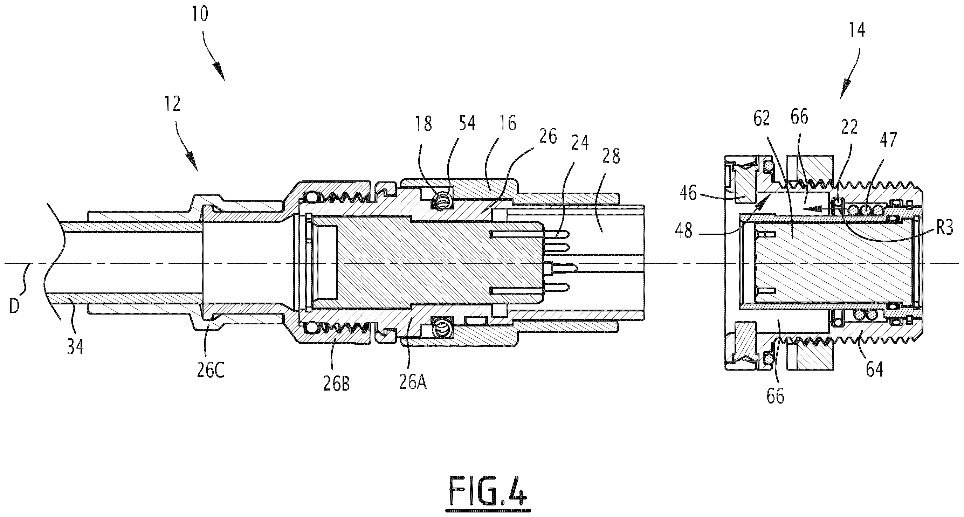

Comme visible sur les figures 1 et 4, l'ensemble 10 comprend une première partie 12 et une deuxième partie 14 mobiles l'une par rapport à l'autre en translation selon un axe de connexion D entre une configuration verrouillée, dans laquelle la première partie et la deuxième partie sont en partie emboitées l'une dans l'autre et verrouillées l'une sur l'autre, et une configuration déverrouillée, représentée sur les figures 1 et 4, dans laquelle la première partie et la deuxième partie sont à l'écart l'une de l'autre.

La configuration verrouillée (non représentée) se déduit de la configuration déverrouillée en rapprochant la première partie 12 et la deuxième partie 14 selon l'axe de connexion D.

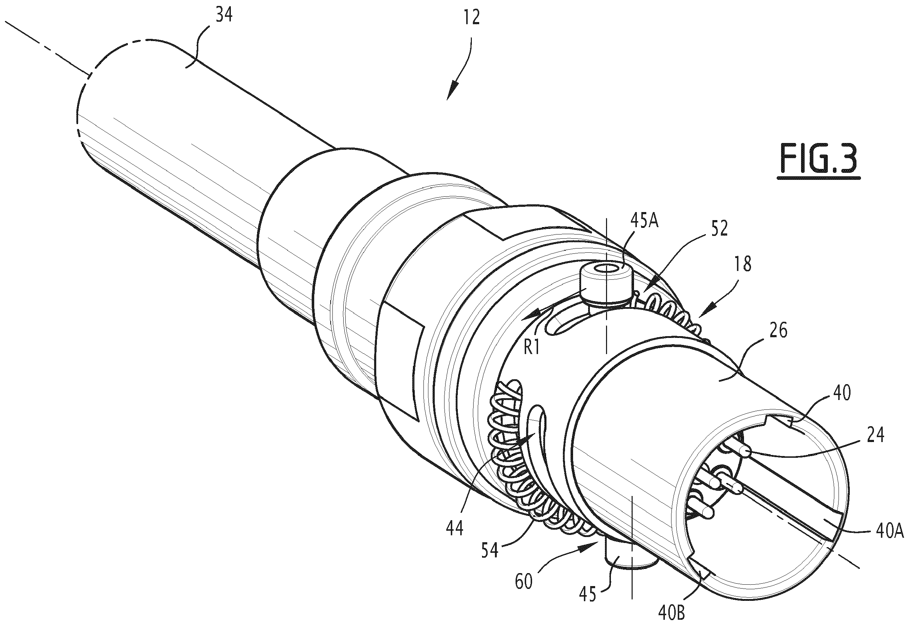

L'ensemble 10 comprend également une bague 16 montée rotative sur la première partie 12 autour de l'axe de connexion D, et un système de rappel 18 (visible sur les figures 3 et 4) adapté pour exercer une force de rappel R1 sur la bague 16 vers une position de repos de la bague par rapport à la première partie 12 (représentée sur les figures 1 à 3).

Avantageusement, l'ensemble 10 comprend également un joint d'étanchéité 22 torique (figure 4) fixé sur la deuxième partie 14 et adapté pour assurer une étanchéité, notamment aux liquides et aux poussières, entre la première partie 12 et la deuxième partie 14 dans la configuration verrouillée.

La première partie 12 comprend un premier contact électrique 24, et un premier manchon 26 isolant électrique entourant le premier contact électrique 24 autour de l'axe de connexion D.

Dans l'exemple, la première partie 12 comprend une pluralité de contacts électriques analogues au premier contact électrique 24, qui est par exemple de type « aiguille ».

Selon une variante, la première partie 12 et la deuxième partie 14 ne contiennent pas de contacts électriques. Dans ce cas, l'ensemble 10 réalise uniquement une connexion mécanique de la première partie 12 et de la deuxième partie 14. L'ensemble 10 sert alors par exemple à assurer la connexion entre des conduites d'huile, d'eau, ou de gaz tels que de l'air comprimé.

Le premier contact électrique 24 est situé dans un logement 28 (figure 4) défini par le premier manchon 26. Le premier contact électrique 24 s'étend axialement.

Par « isolant », on entend ici un élément dont la résistivité électrique à 300 K est par exemple supérieure ou égale à 105 Ω.m.

Par « conducteur », on entend ici un élément dont 15 la résistivité électrique à 300 K est par exemple inférieure ou égale à 10-5 Ω.m.

Le premier contact électrique 24 est adapté pour être relié électriquement à un câble électrique 34 (figure 1) axialement à l'intérieur du premier manchon 26.

Le premier manchon 26 est avantageusement constitué de plusieurs parties 26A, 26B et 26C fixées les unes sur les autres.

Le premier manchon 26 forme une rainure 40 configurée pour recevoir axialement un rail 42 (figure 1) de la deuxième partie 14 lorsque la première partie 12 et la deuxième partie 14 passent de la configuration déverrouillée à la configuration verrouillée.

Dans l'exemple, le premier manchon 26 forme trois rainures 40, 40A, 40B, et la deuxième partie comporte trois rails 42, 42A, 42B.

Dans l'exemple représenté, la partie 26A du premier manchon 26 définit une rainure 44 (figure 3) orientée circonférentiellement autour de l'axe de connexion D et dans laquelle un pion 45 de la bague 16 se déplace.

La rainure 40 est adaptée pour empêcher une rotation de la première partie 12 par rapport à la deuxième partie 14 autour de l'axe de connexion D lorsque la première partie 12 et la deuxième partie 14 passent de la configuration déverrouillée à la configuration verrouillée.

La deuxième partie 14 définit une surface 48 (figure 4) radialement intérieure par rapport à l'axe de connexion D, et comporte au moins un pion 46, le pion faisant saillie à partir de la surface 48 vers l'axe de connexion D.

La deuxième partie 14 comprend par exemple un ressort 47 situé dans le logement 66 et adapté pour exercer un effort axial R3 sur la première partie 12 dans la configuration verrouillée, l'effort axial étant dirigé de la deuxième partie 14 vers la première partie 12.

Le système de rappel 18 comprend une rainure 52 formée par la première partie 12 (ici plus exactement par la paroi 26Adu premier manchon 26), et un ressort 54 logé dans la rainure 52.

La rainure 52 est orientée circonférentiellement autour de l'axe de connexion D.

Le ressort 54 a une première extrémité 56 fixée sur la première partie 12, et une deuxième extrémité 58 fixée sur la bague 16, par exemple sur un pion 45A (figure 3) de la bague 16.

Dans l'exemple représenté, le ressort 54 est adapté pour travailler en compression et repousser la bague 16 vers sa position de repos par rapport à la première partie 12, dans laquelle le pion 45 bute contre une extrémité 60 de la lumière 44.

La deuxième partie 14 comprend un deuxième contact électrique 62 adapté pour recevoir le premier contact électrique 24 dans la configuration verrouillée, et un deuxième manchon 64 isolant entourant le deuxième contact électrique autour de l'axe de connexion D.

Le deuxième contact électrique 62 est situé dans un logement 66 défini par le deuxième manchon 64 (figures 1 et 4).

La bague 16 comprend une paroi 80 s'étendant autour de l'axe de connexion D et définissant par exemple une échancrure 84.

L'échancrure 84 s'ouvre axialement du côté de la deuxième partie 14. L'échancrure 84 est délimitée par un bord 86 curviligne.

Par «échancrure », on veut dire une découpe traversante radialement par rapport à l'axe de connexion D.

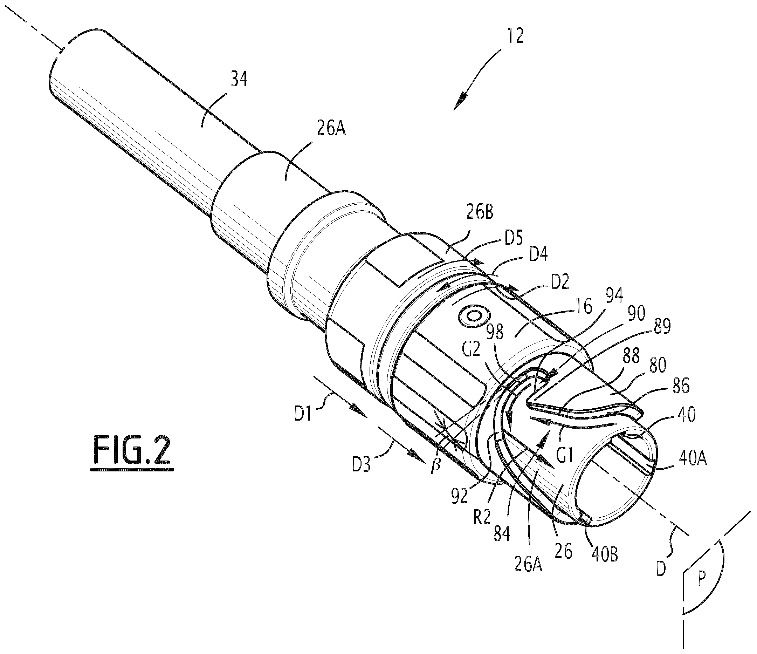

Le bord curviligne 86 forme une rampe de verrouillage 88, un logement 90, et avantageusement une rampe de déverrouillage 92 (figure 2).

Selon une variante non représentée, l'échancrure 84 n'existe pas et la rampe de verrouillage 88, le logement 90, et la rampe de déverrouillage 92 sont formés par un évidement radial (non représenté) ménagé dans la paroi 80, l'évidement définissant le bord 86.

La rampe de verrouillage 88 est configurée pour qu'un déplacement manuel en translation (représenté par la flèche D1 sur les figures 1 et 2) de la première partie 12 et de la deuxième partie 14 axialement l'une par rapport à l'autre de la configuration déverrouillée à une configuration intermédiaire (non représentée) provoque un premier glissement G1 (figure 2) du pion 46 sur la rampe de verrouillage 88.

La rampe de verrouillage 88 est également configurée pour provoquer un déplacement automatique (figuré par une flèche D2 sur la figure 2) de la bague 16 angulairement dans un premier sens par rapport à la première partie 12 entre la position de repos et une position intermédiaire de la bague.

La configuration intermédiaire de l'ensemble 10 se déduit de la configuration déverrouillée représentée sur la figure 1 en rapprochant axialement la première partie 12 et la deuxième partie 14 axialement jusqu'à ce que le pion 46 entre en contact mécanique avec la rampe de verrouillage 88.

La position intermédiaire de la bague 16 se déduit de la position de repos représentée sur la figure 2, le pion 46 ayant glissé jusqu'à un point de décrochement 89 et fait tourner la bague autour de l'axe de connexion D.

Dans l'exemple, la rampe de verrouillage 88 est oblique par rapport à l'axe de connexion D jusqu'au point de décrochement 89.

Dans la position intermédiaire, le déplacement angulaire de la bague 16 par rapport à la première partie 12 passe par un maximum local, dans l'exemple lorsque le pion 46 glisse sur le point de décrochement 89.

La rampe de verrouillage 88 et le logement 90 sont configurés pour qu'un déplacement manuel supplémentaire (représenté par une flèche D3 sur les figures 1 et 2) de la première partie 12 et de la deuxième partie 14 axialement l'une par rapport à l'autre de la configuration intermédiaire à la configuration verrouillée permette un déplacement automatique (représenté par une flèche D4 sur la figure 2) de la bague 16 angulairement dans une deuxième sens, contraire au premier sens, par rapport à la première partie 12, de la position intermédiaire à une position de verrouillage (non représentée) sous l'action du système de rappel 18.

Dans la position de verrouillage de la bague 16, le pion 46 est reçu dans le logement 90 qui définit une butée axiale 94 adaptée pour bloquer le pion 46 axialement par rapport à la première partie 12 et empêcher un déboîtement de l'ensemble 10.

Dans l'exemple représenté, la position de verrouillage de la bague 16 est sensiblement identique à la position de repos. Dit autrement, le passage de la bague 16 de la position de repos représentée sur la figure 2 à la position intermédiaire correspond à un déplacement angulaire dans le sens D2, tandis que le déplacement de la bague 16 de la position intermédiaire à la position de verrouillage correspond à un déplacement angulaire inverse dans le sens D4 par rapport à la première partie 12.

La rampe de déverrouillage 92 est configurée pour qu'un déplacement manuel (représenté par une flèche D5 sur la figure 2) de la bague 16 en rotation autour de l'axe de connexion D par rapport à la première partie 12 dans le premier sens, à partir de la position de verrouillage, sorte le pion 46 du logement 90, et provoque un deuxième glissement G2 du pion 46 sur la rampe de déverrouillage 92, la rampe de déverrouillage 92 réagissant axialement (force R2 représentée sur la figure 2) pour éloigner la première partie 12 et la deuxième partie 14 axialement l'une de l'autre à partir de la configuration verrouillée.

La rampe de déverrouillage 92 est incurvée, et forme un angle α (figure 1) avec l'axe de connexion D se réduisant à mesure que l'on s'éloigne du logement 90.

La forme et la pente de la rampe de verrouillage 88 sont adaptées pour limiter l'effort longitudinal de connexion suivant l'axe D, et pour permettre la compression du ressort 52 par la rotation de la bague 16.

Le logement 90 permet d'assurer un bon verrouillage de l'ensemble et une bonne tenue aux vibrations avec un effort de connexion faible.

La forme de la rampe de déverrouillage 92 permet de convertir le mouvement de rotation de la bague 16 autour de l'axe D en un mouvement de translation de la première partie 12 par rapport à la deuxième partie 14 selon l'axe de connexion D, tout en maintenant un effort radial sur la bague 16 équivalant à l'effort de compression du ressort 52 suivant son axe longitudinal pendant le mouvement de déconnexion.

Dans l'exemple, la rampe de verrouillage 88 et la rampe de déverrouillage 92 divergent l'une par rapport à l'autre selon l'axe de connexion D vers la deuxième partie 14.

La rampe de déverrouillage 92 comprend avantageusement une partie proximale 98 par rapport au logement 90, la partie proximale 98 formant un angle β inférieur à 40°, de préférence 20° avec tout plan P perpendiculaire à l'axe de connexion D.

Dit autrement, la rampe de déverrouillage 92 possède une partie proximale 98 très inclinée par rapport à l'axe de connexion D, et donc très peu inclinée par rapport à tout plan P perpendiculaire à l'axe de connexion D, de sorte que la réaction R2 de la rampe de déverrouillage 92 sur le pion 46 est très forte au début du deuxième glissement G2. Puis la rampe de déverrouillage 92 s'incurve progressivement.

Par exemple, la partie proximale 98 de la rampe de déverrouillage 92 est configurée pour qu'une rotation de 10° de la bague 16 par rapport à la première partie 12 induise un déplacement axial de moins de 3 mm de la première partie par rapport à la deuxième partie.

La bague 16 est par exemple configurée pour pouvoir être tournée d'au moins 20°, de préférence au moins 30°, par rapport à la première partie 12, afin de réaliser la déconnexion.

Avantageusement, la rampe de déverrouillage 92 et la rampe de verrouillage 88 se chevauchent axialement sur plus de 6 mm.

Le fonctionnement de l'ensemble 10 se déduit de sa structure et va maintenant être décrit brièvement.

Initialement, la première partie 12 et la deuxième partie 14 sont par exemple dans la configuration déverrouillée représentée sur les figures 1 et 2. Le premier contact électrique 24 et le deuxième contact électrique 62 sont déconnectés l'un de l'autre.

Puis, dans une phase de connexion de l'ensemble 10, l'utilisateur (non représenté) déplace la première partie 12 et la deuxième partie 14 de la configuration déverrouillée progressivement vers la configuration verrouillée, en passant par la configuration intermédiaire.

Le rail 42 coulisse dans la rainure 40, ce qui guide le mouvement de translation de la première partie 12 et de la deuxième partie 14 l'une par rapport à l'autre selon l'axe de connexion D et empêche une rotation de la première partie 12 par rapport à la deuxième partie 14 autour de l'axe de connexion D.

Le pion 46 vient en contact avec la rampe de verrouillage 88 et réalise le premier glissement G1 sur la rampe de verrouillage. La rampe de verrouillage 88 réagit sur le pion 46 et provoque le déplacement automatique D2 de la bague 16 depuis sa position de repos par rapport à la première partie 12 vers sa position intermédiaire. Pendant le premier glissement G1, le ressort 54 du système de rappel 18 se comprime.

Le passage vers la configuration verrouillée se poursuit par le déplacement manuel D3 de la première partie 12 en translation axiale par rapport à la deuxième partie 14. Ceci provoque le déplacement automatique D4 de la bague 16 dans le deuxième sens par rapport à la première partie 12, de la position intermédiaire à la position de verrouillage, sous l'action du système de rappel 18.

Le pion 46 est alors reçu dans le logement 90. Le pion 46 verrouille la première partie 12 par rapport à la deuxième partie 14, car le pion 46 bute contre la butée axiale 94.

Pendant le premier glissement G1, le premier contact 24 vient s'insérer dans ou contre le deuxième contact électrique 62 et un contact électrique s'établit.

Dans une phase de déconnexion de l'ensemble 10, l'utilisateur réalise le déplacement manuel D5 (figure 2) de la bague 16 en rotation par rapport à la première partie 12 autour de l'axe de connexion D. La première partie 12 est bloquée en rotation par rapport à la deuxième partie 14 par le rail 42 situé dans la rainure 40. Ceci sort le pion 46 du logement 90 et provoque le deuxième glissement G2 du pion 46 sur la rampe de déverrouillage 92.

La rampe de déverrouillage 92 réagit axialement sur le pion 46 en lui appliquant la force R2. Ceci éloigne la première partie 12 de la deuxième partie 14 axialement à partir de la configuration verrouillée.

Le ressort 47 exerce l'effort axial R3 sur la première partie 12, ce qui aide le passage de la configuration verrouillée à la configuration déverrouillée.

Du fait de l'incurvation de la rampe de déverrouillage 92, la force de déboîtement qui s'applique sur la première partie 12 est initialement très forte et se réduit au fur et à mesure du deuxième glissement G2.

Au début du mouvement de déboîtement, le pion 46 parcourt la partie proximale 98 de la rampe de déverrouillage 92. La réaction appliquée sur la deuxième partie 14 est alors très forte. Le pion 46 poursuit ensuite sa course sur le reste de la rampe de déverrouillage 92.

Dans l'exemple, le mouvement de rotation de la bague 16 se poursuit éventuellement jusqu'à ce que le pion 45 bute contre l'extrémité 60 de la lumière 44. La compression du ressort 52 par le pion 45A est alors maximale. L'utilisateur peut ensuite lâcher la bague 16. Sous l'action du système de rappel 18, la bague 16 tourne vers sa position de repos (flèche D4) jusqu'à ce que le pion 46 bute contre la rampe de verrouillage 88, du côté opposé au logement 90 axialement par rapport au point de décrochage 89.

L'utilisateur peut alors exercer une action manuelle de translation sur la première partie 12 pour continuer de l'éloigner de la deuxième partie 14.

Grâce aux caractéristiques décrites ci-dessus, la connexion et la déconnexion de la première partie 12 et de la deuxième partie 14 sont facilitées. La rampe de verrouillage 88 et le logement 90 forment avec le pion 46 un système à baïonnette « automatique », car il n'est pas nécessaire de tourner manuellement la bague 16 par rapport à la première partie 12 pour obtenir le verrouillage. Le verrouillage s'effectue au contraire automatiquement grâce au premier glissement G1 et à la réception du pion 46 dans le logement 90.

En outre, le déverrouillage est aisé, grâce à la coopération du pion 46 avec la rampe de déverrouillage 92. Cette coopération crée une force de déboîtement de la première partie 12 initialement très forte, permettant avantageusement de vaincre la friction du joint d'étanchéité 22 sur la surface d'étanchéité 96. L'effort axial R3 exercé par le ressort 47 aide le déverrouillage.

## Revendications

1. Ensemble comprenant une première partie et une deuxième partie (14) mobiles l'une par rapport à l'autre en translation selon un axe de connexion (D) entre une configuration verrouillée, dans laquelle la première partie (12) et la deuxième partie (14) sont en partie emboîtées l'une dans l'autre et verrouillées l'une sur l'autre, et une configuration déverrouillée, dans laquelle la première partie (12) et la deuxième partie (14) sont à l'écart l'une de l'autre, **caractérisé en ce que** :
- la première partie (12) comprend l'un d'un rail (42) et d'une rainure (40), et la deuxième partie (14) comprend l'autre d'un rail (42) et d'une rainure (40), le rail (42) étant configuré pour coulisser axialement dans la rainure (40) lorsque la première partie (12) et la deuxième partie (14) passent de la configuration déverrouillée à la configuration verrouillée,
- l'ensemble (10) comprend une bague (16) montée rotative sur la première partie (12) autour de l'axe de connexion (D), la bague (16) comprenant une paroi (80) s'étendant autour de l'axe de connexion (D) et formant une rampe de verrouillage (88) et un logement (90),
- la deuxième partie (14) définit une surface (48) radialement intérieure par rapport à l'axe de connexion (D), ladite surface (48) radialement intérieure délimitant un logement (66) adapté pour recevoir au moins la paroi (80) de la bague (16) dans la configuration verrouillée, la deuxième partie (14) comportant au moins un pion (46) faisant saillie dans le logement (66) à partir de la surface (48) radialement intérieure,
- la première partie (12) comprend un système de rappel (18) adapté pour exercer une force de rappel (R1) sur la bague (16) vers une position de repos de la bague (16), et
- la rampe de verrouillage (88) et le logement (90) sont configurés pour qu'un déplacement manuel (D1) de la première partie (12) et de la deuxième partie (14) axialement l'une par rapport à l'autre de la configuration déverrouillée à une configuration intermédiaire provoque un premier glissement (G1) du pion (46) sur la rampe de verrouillage (88), et un déplacement automatique (D2) de la bague (16) angulairement dans un premier sens par rapport à la première partie (12) entre la position de repos et une position intermédiaire, et pour qu'un déplacement manuel (D3) de la première partie (12) et la deuxième partie (14) axialement l'une par rapport à l'autre de la configuration intermédiaire à la configuration verrouillée permette un déplacement automatique (D4) de la bague (16) angulairement par rapport à la première partie (12) dans un deuxième sens contraire au premier sens, de la position intermédiaire à une position de verrouillage sous l'action du système de rappel (18), le pion (46) étant reçu dans le logement (90) lorsque la bague (16) est dans la position de verrouillage, le logement (90) définissant une butée axiale (94) adaptée pour bloquer le pion (46) axialement par rapport à la première partie (12).

2. Ensemble (10) selon la revendication 1, dans lequel :
- la première partie (12) comprend au moins un premier contact électrique (24), et un premier manchon (26) isolant électrique entourant le premier contact électrique (24) autour de l'axe de connexion (D), et
- la deuxième partie (14) comprend au moins un deuxième contact électrique (62), et un deuxième manchon (64) isolant électrique entourant le deuxième contact électrique (62) autour de l'axe de connexion (D),
le premier contact électrique (24) étant en contact électrique avec le deuxième contact électrique dans la configuration verrouillée, et à l'écart du deuxième contact électrique (62) dans la configuration déverrouillée.

3. Ensemble selon la revendication 1 ou 2, dans lequel la paroi (80) de la bague (16) forme une rampe de déverrouillage (92) adaptée pour qu'un déplacement manuel (D4) de la bague (16) en rotation autour de l'axe de connexion (D) dans le premier sens par rapport à la première partie (12) à partir de la position de verrouillage sorte le pion (46) du premier logement (90) et provoque un deuxième glissement (G2) du pion (46) sur la rampe de déverrouillage (92), la rampe de déverrouillage (92) exerçant une force (R2) axiale sur le pion (46) pour éloigner la première partie (12) et la deuxième partie (14) axialement l'une de l'autre à partir de la configuration verrouillée.

4. Ensemble (10) selon la revendication 3, dans lequel la rampe de déverrouillage (92) est incurvée, la rampe de déverrouillage (92) formant un angle (α) avec l'axe de connexion (D) se réduisant à mesure que l'on s'éloigne du logement (90).

5. Ensemble (10) selon la revendication 3 ou 4, dans lequel la rampe de déverrouillage (92) comprend une partie proximale (98) par rapport au logement (90), la partie proximale (98) formant un angle (β) inférieur à 40°, de préférence 20°, avec tout plan (P) perpendiculaire à l'axe de connexion (D).

6. Ensemble selon l'une quelconque des revendications 1 à 5, dans lequel la deuxième partie (14) comprend un ressort (47) situé dans le logement (66) et adapté pour exercer un effort axial (R3) sur la première partie (12) dans la configuration verrouillée, l'effort axial étant dirigé de la deuxième partie (14) vers la première partie (12).

7. Ensemble (10) selon l'une quelconque des revendications 1 à 6, dans lequel la paroi (80) définit une échancrure (84) s'ouvrant axialement du côté de la deuxième partie (14), la rampe de verrouillage (88) et le logement (90) étant formés par un bord curviligne (86) de l'échancrure (84).

8. Ensemble (10) selon l'une quelconque des revendications 1 à 7, dans lequel la première partie (12) comprend une paroi (26A) s'étendant au moins en partie autour de l'axe de connexion (D), la paroi (26A) définissant une première rainure (44) ou une lumière, orientée circonférentiellement autour de l'axe de connexion (D), la bague (16) comprenant un pion (45) adapté pour se déplacer dans la première rainure (44) ou la lumière lorsque la bague (16) tourne par rapport à la première partie (12).

9. Ensemble (10) selon l'une quelconque des revendications 1 à 8, dans lequel le système de rappel (18) comprend une deuxième rainure (52) formée par la première partie (12) et orientée circonférentiellement autour de l'axe de connexion (D), et un ressort de rappel (54) s'étendant le long de la rainure (42) entre la première partie (12) et la bague (16).

10. Procédé de verrouillage-déverrouillage d'une première partie (12) et d'une deuxième partie (14) d'un ensemble (10), la première partie et la deuxième partie (14) étant mobiles l'une par rapport à l'autre en translation selon un axe de connexion (D) entre une configuration verrouillée, dans laquelle la première partie (12) et la deuxième partie (14) sont en partie emboîtées l'une dans l'autre et verrouillées l'une sur l'autre, et une configuration déverrouillée, dans laquelle la première partie (12) et la deuxième partie (14) sont à l'écart l'une de l'autre, la première partie (12) comprenant l'un d'un rail (42) et d'une rainure (40), et la deuxième partie (14) comprenant l'autre d'un rail (42) et d'une rainure (40), une bague (16) étant montée rotative sur la première partie (12) autour de l'axe de connexion (D), la bague (16) comprenant une paroi (80) s'étendant autour de l'axe de connexion (D) et formant une rampe de verrouillage (88) et un logement (90), la deuxième partie (14) définissant une surface (48) radialement intérieure par rapport à l'axe de connexion (D), ladite surface (48) radialement intérieure délimitant un logement (66) adapté pour recevoir au moins la paroi (80) de la bague (16) dans la configuration verrouillée, la deuxième partie (14) comportant au moins un pion (46) faisant saillie dans le logement (66) à partir de la surface (48) radialement intérieure, un système de rappel (18) exerçant une force de rappel (R1) sur la bague (16) vers une position de repos de la bague (16) par rapport à la première partie (12), le procédé comprenant les étapes suivantes :
- déplacement manuel (D1) de la première partie (12) et de la deuxième partie (14) axialement l'une par rapport à l'autre de la configuration déverrouillée à une configuration intermédiaire,
- coulissement du rail (42) axialement dans la rainure (40) alors que la première partie (12) et la deuxième partie (14) passent de la configuration déverrouillée à la configuration verrouillée,
- du fait dudit déplacement manuel (D1), premier glissement (G1) du pion (46) sur la rampe de verrouillage (88), et déplacement automatique (D2) de la bague (16) angulairement dans un premier sens par rapport à la première partie (12) entre la position de repos et une position intermédiaire,
- déplacement manuel (D3) de la première partie (12) et la deuxième partie (14) axialement l'une par rapport à l'autre de la configuration intermédiaire à la configuration verrouillée, et
- du fait dudit déplacement manuel (D3), déplacement automatique (D4) de la bague (16) par rapport à la première partie (12) angulairement dans un deuxième sens contraire au premier sens, de la position intermédiaire à une position de verrouillage sous l'action du système de rappel (18), le pion (46) étant reçu dans le premier logement (90) lorsque la bague (16) est dans la position de verrouillage, le premier logement (90) définissant une butée axiale (94) bloquant le pion (46) axialement par rapport à la première partie (12).
